Europäisches Patentamt

European Patent Office

Office européen des brevets

(11) Publication number: **0 068 214**
A1

(12) EUROPEAN PATENT APPLICATION

(21) Application number: 82105079.6

(22) Date of filing: 09.06.82

(51) Int. Cl.³: **H 02 K 3/28**

(30) Priority: 10.06.81 JP 89852/81

(43) Date of publication of application: 05.01.83
Bulletin 83/1

(84) Designated Contracting States: DE GB IT

(71) Applicant: MITSUBISHI DENKI KABUSHIKI KAISHA, 2-3,
Marunouchi 2-chome Chiyoda-ku, Tokyo 100 (JP)

(72) Inventor: Itani, Kotaro, 889, Nishiki-machi, Nagasaki
Nagasaki Prefecture (JP)

(74) Representative: Patentanwälte Kern, Popp, Sajda, v.
Bülow & Partner,
Widenmayerstrasse 48 Postfach 86 06 24,
D-8000 München 86 (DE)

(54) An A.C. dynamoelectric machine.

(57) Described is a double-layered lap winding consisting in
a lap winding with coils (2) removed from partition portions
for convenience in partitioning the iron core (1) into plural
sections.

"An A.C. Dynamoelectric Machine"

This invention relates to an a.c. dynamoelectric machine with an iron core partitioned into plural sections or segments and, more particularly, to a double-layered winding used therefor.

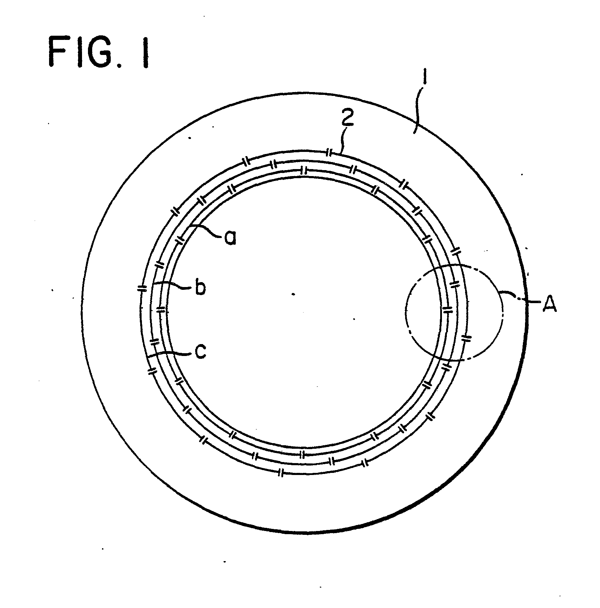

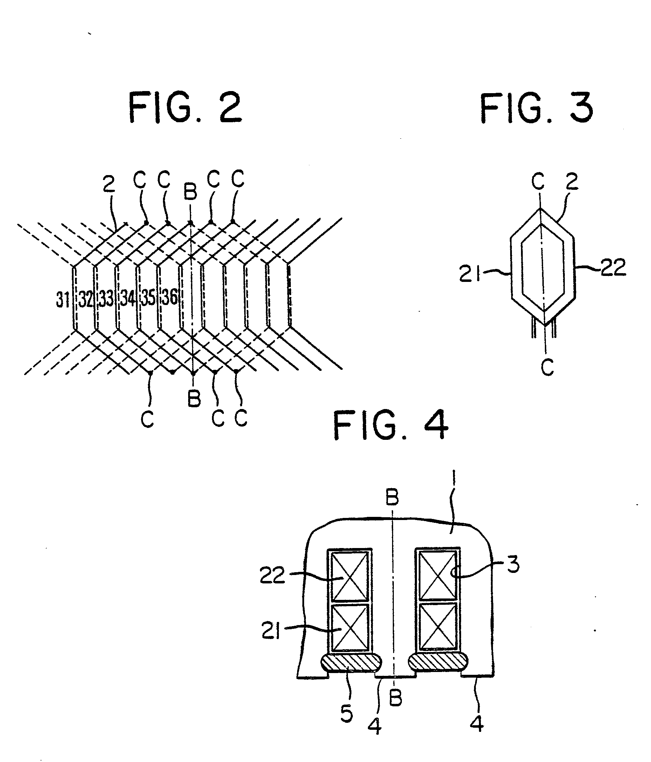

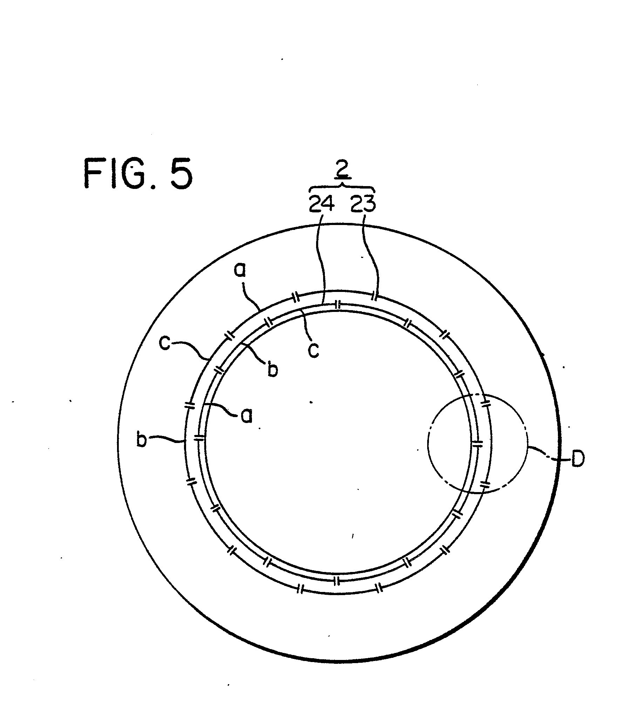

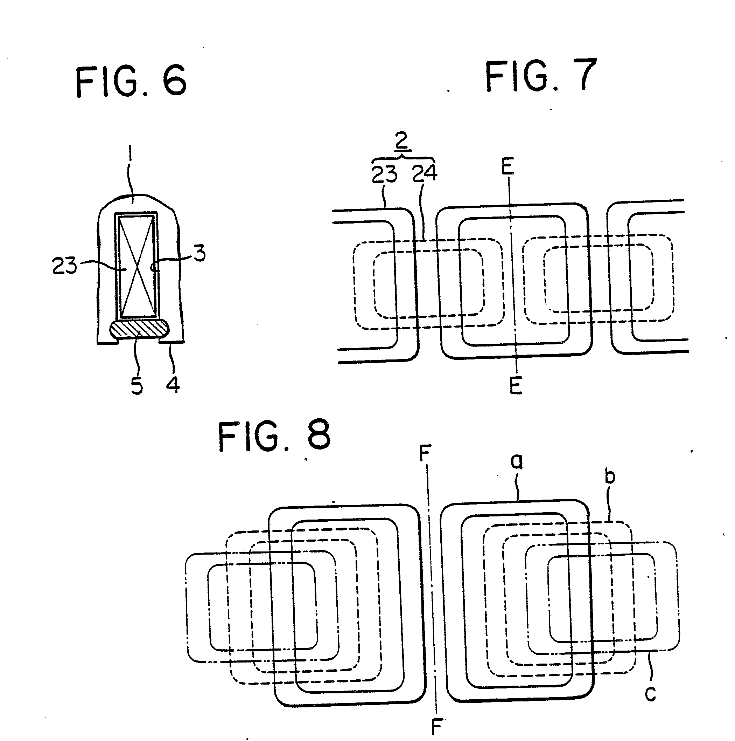

Figs. 1 and 2 illustrate a lap winding which is the most popular armature winding system adopted in dynamoelectric machines such as induction or synchronous machines. Fig.1 illustrates the winding as a whole and Fig. 2 the placement of coils in a portion A in Fig. 1. Fig. 1 illustrates the placement of coils for a three-phase machine wherein the three phase coils 2 for phases a, b and c are separated by an electrical angle of $120^{\circ}$ from one another and placed in slots 3 provided in the inner periphery of an armature core 1 as shown in Fig. 4. The numeral 4 denotes armature teeth and numeral 5 denotes a wedge. The armature winding shown is the double layer winding with a given coil consisting of a coil side 21 placed in the upper position in a No. 31 slot and a coil side 22 placed in the lower position in a No. 36 slot. Fig. 5 illustrates a concentric winding system used for armature coils of small-sized multi-pole dynamoelectric machines. Fig. 5 shows the overall arrangement and Fig. 7 the placement of coils in a portion D indicated in Fig. 5. Figs. 5 and 7 illustrate the placement of coils in the three-phase winding system, and the coils 2 are grouped into larger coils 23 and smaller coils 24 which are placed in slots provided in the inner periphery of an armature core 1 at a distance corresponding to 180 electrical degrees. With concentric winding, only one coil side is placed in each slot as shown in Fig. 6 (single layer winding).

These two winding systems have the following merits and demerits.

With lap winding, an optimum design may be selected in accordance with the characteristics required of dynamoelectric machines. Moreover, the contents of higher harmonics can be reduced by employing a fractional-pitch winding.

With concentric winding, only one coil side can be placed in each slot (single layer winding), and the number of slots is rather small resulting in a larger reactance. Moreover, designing freedom is limited because the fractional-pitch winding cannot be employed. In this manner, the concentric winding system is inferior in general to the lap winding system and may be used only with small-sized dynamoelectric machines, as discussed above.

On the other hand, the stator is sometimes fabricated as partitioned sections by reason of transport limitations in larger dynamoelectric machines such as water-wheel generators or induction motors, and by reason of maintenance difficulties in special purpose machines mounted on board a vessel, such as main shaft generators. Especially when the stator is fabricated in partitioned sections from maintenance considerations, the decisive factor in the selection of the armature winding methods is which of the two winding methods involves greater difficulties in performing the winding and insulating operations on the partitioned portions of the stator.

Thus, with lap winding, when partitioning the iron core 1 along line B-B in Fig. 2, the respective coils 2 (five coils in the present example) at the partitioned portions are partitioned at points C. Thus, it is necessary to manufacture the coils at the partitioned portions as half coils and to place them in the slots with necessary insulation after the stator assembly operation, that is, after the connection of the half coils of one section to the half coils of the other section of the stator. In high voltage machines, such operation may involve prolonged labor and increased costs. With concentric winding, the coil positioned at the partitioned portion denoted by line E-E in Fig. 7 must be fabricated in two half coils which are placed subsequently in the slots and subjected to insulating operation. However, in this case, the operation may be facilitated significantly because of the reduced number of coils and the simpler coil shape. In the partitioned concentric winding shown in Fig. 8, partition of armature coils can be made without the necessity of performing special winding and insulating operations.

In summary, the concentric winding has no merit over the lap winding, except that the stator can be partitioned more easily than in lap winding. On the other hand, there is presently not known a lap winding coil that can be partitioned into sections and that can satisfy the requirements placed on electrical generators.

This invention has been made to obviate the difficulties involved in partitioning the coils inherent in the conventional lap winding, and the invention as claimed envisages to provide a double-layered lap winding wherein the coils are removed from the partition portions of the stator for facilitating the partitioning of the stator into plural sections or segments.

Preferred ways of carrying out the invention are described in detail below with reference to drawings, in which:-

Fig. 1　is a developed plan view showing the overall arrangement of the lap winding coils in the conventional alternating current dynamoelectric machines;

Fig. 2　is a detailed view showing the manner of coil distribution in a portion A indicated in Fig. 1;

Fig. 3　is a front view of the lap winding coil;

Fig. 4　is a sectional view of the core with the lap winding coil mounted thereto;

Fig. 5　is a developed plan view showing the overall arrangement of the concentric winding coil;

Fig. 6　is a sectional view showing the core with the concentric winding coil mounted thereto;

Fig. 7　is a detailed view showing the manner of coil distribution in a portion D indicated in Fig. 5;

Fig. 8　is a developed plan view showing the partitioned concentric winding coil;

Fig. 9　is a developed plan view showing the winding system according to an embodiment of the present invention;

Fig. 10 is a detailed view showing the manner of coil distribution in a portion G indicated in Fig. 9; and

Fig. 11 is a developed plan view showing the coil according to a modification of the present invention.

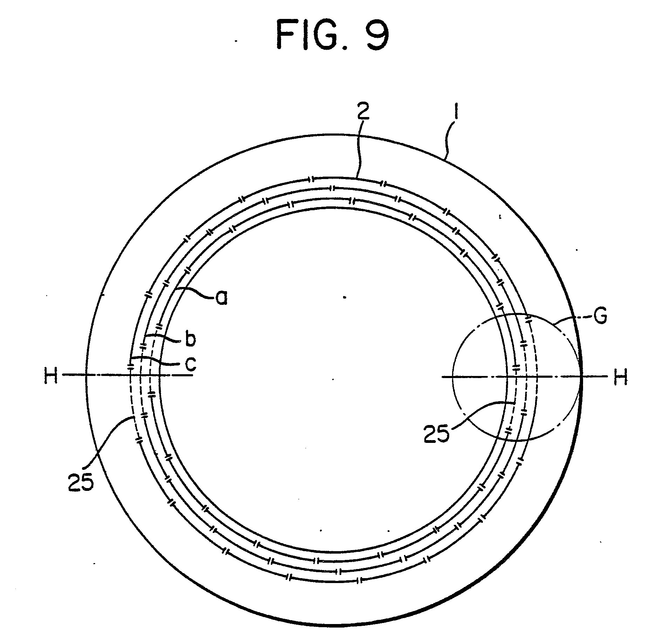

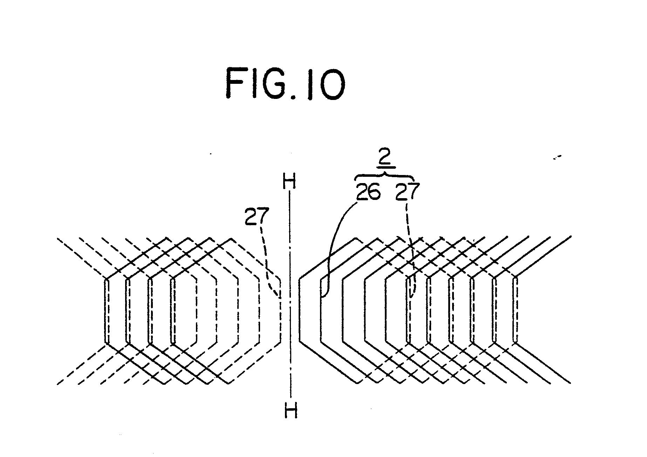

Figs. 9 and 10 illustrate a winding mode according to an embodiment of the invention, wherein Fig. 9 illustrates the overall winding mode and Fig. 10 the manner of coil distribution for a portion G indicated in Fig. 9. As an example, the machine is assumed to have 18 poles. Fig. 9 illustrates a 3-phase 18-pole lap winding system, with a certain number of coils 2 in the partitioned portion G corresponding to one pole for each coil section (a zone 25 shown by dotted lines in Fig. 9) and hence to two poles in case of partitioning the stator into two sections, being removed. The upper and low parts of the core 1 each have eight-pole windings thus providing a 16-pole stator winding in its entirety. Because there is no difference in the pole-to-pole distance of the 18-pole winding and that of the 16-pole winding, the frequency generated is the same. As is evident from Fig. 10, only the upper position conductors 26 or the lower position conductors 27 are placed in the slots in the vicinity of the partitioning line H-H. The following effects may be caused on generator characteristics as a result of application of the lap winding system with deletion of coils from the partition portions of the stator core:

(a) Magnetic saturation of the core at the partition line.

(b) Unbalanced terminal voltage.

(c) Increased shaft voltage.

The present inventors have conducted an experiment on 18-pole and 16-pole machines to make a comparative check of the above effects. It has become clear from this experiment that there is no difference between the two as for the above effects except that the 16-pole machine demonstrated slightly larger stray load loss than the 18-pole machine due to ununiform distribution of magnetic fluxes. Thus, the 16-pole machine obtained by rewinding operated satisfactorily as an electric generator and the present winding system has proved to be highly effective whenever partitioning of the stator is desired for a particular application.

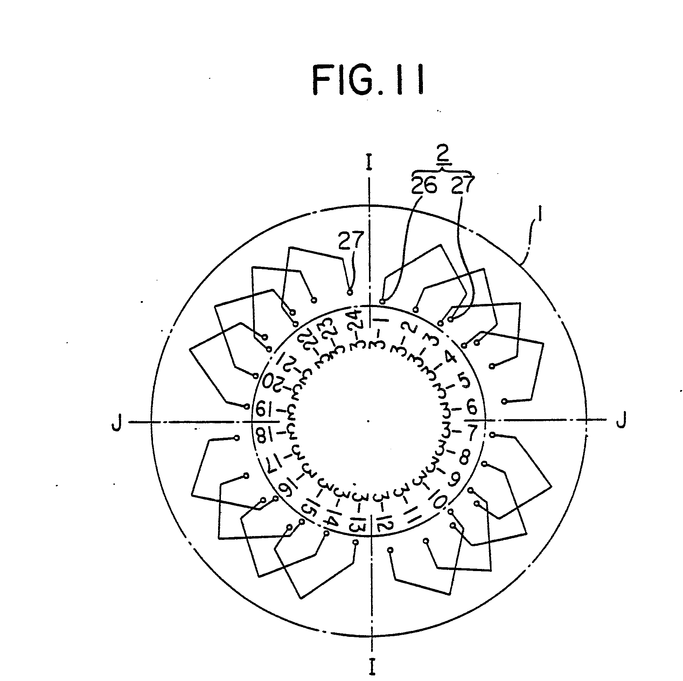

Fig. 11 as a developed plan view of the stator for explanation of the present winding system for the exemplary case of a 12-pole machine. With the number of slots being 24, the coils 2 are placed in a double-layer winding configuration so that one coil in Fig. 11 has its upper position conductor 26 placed in a slot 3-1 and its lower position conductor 27 in a slot 3-3. Only upper position conductors 26 are placed in slots 3-1, 3-2, 3-8, 3-13, 3-14, 3-19 and 3-20, whereas only lower position conductors 27 are placed in slots 3-5, 3-6, 3-11, 3-12, 3-17, 3-18, 3-23 and 3-24. Both the upper position conductors 26 and the lower position conductors 27 are placed in the other slots. The core 1 is partitioned into four sections at the teeth thereof along lines I-I and J-J.

In a case where the core is partitioned into two sections as illustrated in Fig. 9, the present winding system may preferably be applied to dynamoelectric machines with the number of poles being an even number except the multiples of 4 and larger than 14, in consideration of the shaft voltage and unbalance of electrical voltage.

It is seen from above that, according to the present invention, the novel winding method consisting in partially deleting the armature coils at the partition lines of the stator may be advantageously applied to the case of partitioning the stator of dynamoelectric machines into plural sections. In this case, any special winding mode or insulation of the partition portion is not required and the electrical connection of the stator segments can be made with connecting leads in the terminal box, with the resulting merit of reduction of operational time and manufacturing cost.

0068214

Claims:

1. An a.c. dynamoelectric machine, characterized by an iron core (1), a multiplicity of slots (3-1, etc.) formed in the overall periphery of the iron core (1), a multiplicity of coils (2) in a double layered configuration each having an upper position conductor (26) and a lower position conductor (27), said coils (2) having the upper position and lower position conductors (26 or 27) placed in said slots (3-1, etc.), certain ones of said slots (3-1, etc.) accommodating only said upper position conductors (26) or said lower position conductors (27), and said iron core (1) being partitioned into plural sections at the portions corresponding to said slots (3-1, etc.) accommodating only said upper position conductors (26) or said lower position conductors (27).

2. The machine as claimed in claim 1, wherein the machine is of N poles and partitioned into n sections for providing a N-n winding configuration.

3. The machine as claimed in claim 1, wherein the machine is partitioned into two sections and has the number of poles which is more than 14 and an even number except multiples of four.

0068214

# FIG. I

# FIG. 2

# FIG. 3

# FIG. 4

# FIG. 5

FIG. 6

23 ⌧ 3

5   4

FIG. 7

2
23  24

E

E

FIG. 8

F   a   b

c

F

0068214

FIG. 9

# FIG.IO

# FIG.11

European Patent
Office

**EUROPEAN SEARCH REPORT**

0068214
Application number

EP 82 10 5079

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-C- 761 310 (SIEMENS-SCHUCKERT) * page 2, lines 19-86; figures 1,2 * | 1-3 | H 02 K 3/28 |
| Y | DE-B-1 162 468 (LICENTIA) * column 2, lines 41-52; column 3, lines 1-30; figure 2 * | 1 | |
| Y | DE-B-1 060 475 (SIEMENS-SCHUCKERT) * column 1, lines 15-33; column 3, lines 6-22; figures 1,2 * | 1,3 | |
| A | FR-A- 370 204 (SOCIETE ALSACIENNE DE CONSTRUCTIONS MECANIQUES) * figures 1,2 * | 1 | |
|  |  |  | TECHNICAL FIELDS SEARCHED (Int. Cl. ³) H 02 K |

The present search report has been drawn up for all claims

| Place of search THE HAGUE | Date of completion of the search 15-09-1982 | Examiner TIO K.H. |
|---|---|---|